# EUROPEAN PATENT SPECIFICATION

(11) **EP 0 535 997 B1**
(45) Date of publication and mention of the grant of the patent: **24.04.1996**
(21) Application number: 92309055.9
(22) Date of filing: 05.10.1992
(51) Int. Cl.: F16L 33/00

(54) **Leakage-detecting hose**
Schlauch mit Lecknachweis
Tuyau avec détection d'une fuite

(30) Priority: 04.10.1991 JP 257853/91
(43) Date of publication of application: 07.04.1993
(73) Proprietor: BRIDGESTONE CORPORATION, Tokyo 104 (JP)
(72) Inventor: Yamamoto, Megumi, Yokohama City, Kanagawa Pref. (JP); Sugimura, Yoshihiro, Yokohama City, Kanagawa Pref. (JP)
(74) Representative: Whalley, Kevin

(56) References cited:
- GB-A- 2 027 838
- GB-A- 2 138 917

## Description

This invention relates to a leakage-detecting hose, and more particularly to a structure of an end portion in a hose capable of exactly detecting a leakage of transporting fluid in a simple structure without causing leakage from the inside of the hose toward the outside thereof.

As this type of the hose, there have hitherto been known hoses disclosed in, for example, Japanese Patent Application Publication No. 57-25756, which is equivalent to GB-A-2027838.

This hose is a reinforced rubber hose comprising a hose body provided with a reinforcing layer embedded therein and a fastening member fixed to an inner face of an end portion of the hose body. In such a hose, a passage for a leaked fluid extending in the longitudinal direction of the hose as a whole is arranged outside an inner rubber layer in the hose body to guide the fluid leaked in the radial direction of the hose body into an end portion of the hose body through the passage. Furthermore, a rubber lining sheet layer and a rubberized reinforcing layer are disposed on the outer periphery of the passage in this order to prevent the leakage of the leaked fluid toward the outside of the passage. Moreover, free end portions of a relaxed flexible bag body are liquid-tightly secured to the outer periphery of the fastening member at two positions spaced apart in the axial direction of the hose body and at the same time the passage is communicated with the inside of the bag body, whereby the leaked fluid passed through the passage is flowed into the flexible bag body to expand the bag body.

In the reinforced rubber hose, therefore, it is possible to judge the leakage of the transported fluid by confirming the expansion of the flexible bag body.

In such a conventional technique, the securing and the folded arrangement of the flexible bag body become considerably troublesome. Furthermore, the flexible bag body is attached to the hose body at the side of the fastening member and merely protected with the rubber sheet covering the outer periphery of the bag body, so that the resistance to damage is low and also the outer peripheral surface becomes uneven and further the length of the fastening member becomes undesirably long.

It is, therefore, an aim of the present invention to advantageously solve the above problems of the conventional technique and to provide a leakage-detecting hose in which a structure of detecting a leakage of a transported fluid is simplified to facilitate its arrangement and the detecting means is constituted with a rigid material to largely enhance the resistance to damage and sufficiently ensure the reliability of its operation and also the length of the fastening member can effectively be shortened.

According to the invention, there is provided a leakage-detecting hose comprising a base hose body provided with a reinforcing layer embedded therein and a fastening member fixed to the inner periphery of an end portion of the base hose body, wherein the outer periphery of the base hose body is covered with an elastic member, a passage for guiding leaked fluid between adjacent side walls of said elastic member, and an end portion of a pressure-resistant reinforcing layer arranged on the outer periphery of the elastic member is fixed to a flange portion of an annular protrusion located at a middle position in the longitudinal direction of the fastening member, and at least one through-hole extending in the longitudinal direction of the fastening member is formed in the annular protrusion, said through-hole communicating with said passage, and a rod member movable toward a side of a hose end is disposed in the through-hole, said rod member being disposed within said through-hole in such a manner that it is moved against the force of a coil spring by the pressure of the leaking fluid itself in a direction away from the base hose body toward a limit moving position indicating presence of leakage fluid within said passage.

The invention will be further described, by way of example only, with reference to the accompanying drawings, wherein:
Fig. 1 is a diagrammatic sectional view of a main part of an embodiment of a leakage-detecting hose according to the invention; and
Figs. 2a and 2b are schematic side views illustrating states of leakage detecting means before and after the operation thereof, respectively.

In the leakage-detecting hose according to the invention, for instance, when a fluid transporting under a high pressure leaks out along the outer periphery of the fastening member, the leaked fluid directly pushes the rod member, or when the leaked fluid passing through the base hose body in the radial direction under a high pressure arrives at the pressure-resistant reinforcing layer fixed at its end portion to the flange portion of the annular protrusion, the leakage of the fluid into the outside of the hose is obstructed by the pressure-resistant reinforcing layer to indirectly push the rod member. As a result, the rod member is moved to a limit pushed position.

Therefore, the leakage of the transported fluid can simply be confirmed by visually observing the moved state of the rod member from the outside of the hose.

Moreover, when a passage for guiding the leaked fluid is formed between the base hose body and the elastic member, the leaked fluid passing through the base hose body in the radial direction can be smoothly introduced into a rear position of the rod member.

In such a detecting hose, the leakage detecting means may be comprised with at least one through-hole formed in the annular protrusion and a rod member housed in the through-hole, so that the structure can be sufficiently simplified as compared with the flexible bag body used in the conventional technique, and also the number of work steps for the arrangement of the detecting means can be considerably reduced.

Furthermore, the annular protrusion, rod member and the like may be made from a rigid material such as plastics, metal or the like, whereby the resistance to damage is enhanced and the reliability of the operation can be sufficiently ensured.

Moreover, the full length of the fastening member can be shortened as compared with that of the conventional technique by properly selecting the length of the annular protrusion in the longitudinal direction, whereby reductions of the hose weight and of the cost can be realized.

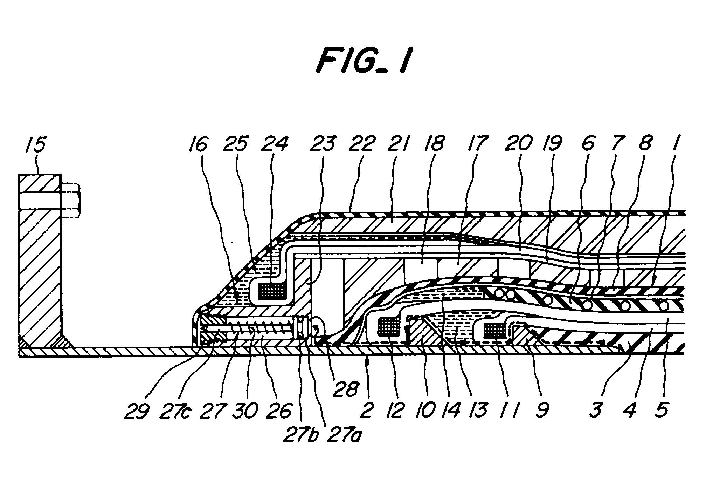

In Fig. 1 is sectionally shown a main part of an embodiment of a leakage-detecting hose according to the invention, in which numeral 1 is a base hose body and numeral 2 is a fastening member fixed to an inner face of an end portion of the base hose body 1.

The base hose body 1 comprises an inner rubber layer 3, and inner and outer pressure-resistant reinforcing layers 4, 5 arranged on the outer periphery of the inner rubber layer 3, and is further provided on the outside of the outer pressure-resistant reinforcing layer 5 with a wire-reinforced rubber layer 6, a cord reinforcing layer 7 and a cover rubber layer 8.

The base hose body 1 is fixed at its end portion to the fastening member 2 by bonding the inner rubber layer 3 to the outer periphery of the fastening member 2 through vulcanization, while turning free end portions of the inner and outer pressure-resistant reinforcing layers 4, 5 around bead wires 11, 12 at positions beyond saw-toothed ribs 9, 10 formed on the fastening member 2 at given interval in the longitudinal direction and then firmly tightening these turnup portions with tightening cords 13, 14.

In addition to two saw-toothed ribs 9, 10 located in the base hose body 1, the fastening member 2 is provided at a portion protruding from the base hose body 1 with a connecting flange 15 for connecting the hose to another hose and at a middle position in the longitudinal direction with an annular protrusion 16 for constituting a leakage detecting means.

In the illustrated hose, an elastic member(s) 17 for absorbing shock of a leaked fluid such as a foamed elastic member is spirally wound on the outer peripheral surface of the base hose body 1 at a given interval to form a passage(s) 18 for guiding the leaked fluid between adjacent side walls of the elastic member 17, which is covered with a lining rubber layer 19 and a reinforcing layer 20. The elastic member 17 may be made from a foamed body of nitrile-butadiene rubber, styrene-butadiene rubber, polyethylene, vinyl chloride resin or the like, and the lining rubber layer 19 may be made from nitrile-butadiene rubber, styrene-butadiene rubber or the like. The cords embedded in the reinforcing layer 20 may be the same, e.g. polyester cords as used in the reinforcing layers 4, 5, 7 of the base hose body 1. Moreover, it is preferable that the crossing cord angle in the reinforcing layer is an angle of repose for preventing the deformation of the passage 18 for guiding the leaked fluid.

In the illustrated embodiment, a float member 21 made, for example, of a foamed material is arranged on the outer periphery of the pressure-resistant reinforcing layer 20, and further an outer coating rubber layer 22 is arranged on the outer surface of the float member 21.

Furthermore, the pressure-resistant reinforcing layer 20 is firmly secured to the annular protrusion 16 by turning up an end portion of the reinforcing layer 20 around a bead wire 24 at a position beyond a flange portion 23 of the annular protrusion 16 made from a rigid material and then tightening an outer surface of the turn-up portion with a tightening cord 25. On the other hand, at least one through-hole 26 extending in the longitudinal direction of the fastening member 2 is formed in the annular protrusion 16 at a position corresponding to the passage 18 for guiding the leaked fluid, and a rod member 27 moving toward a side of the hose end is disposed in the through-hole 26.

In the rod member 27, a large-diameter head portion 27a is slidably contacted with a wall face of the annular protrusion 16 forming the through-hole 26 through a seal ring 27b so as to move toward the saw-toothed rib 10 while preventing the rod member 27 from passing out toward the rib side with a stopper 28. On the other hand, a small-diameter shaft portion 27c is slidably contacted with a through-hole wall of an annular screw member 29 threaded with the through-hole 26 for preventing the rod member 26 from passing out toward the side of the connecting flange 15. At the same time, the whole of the rod member 27 can be energized in a direction moving toward the rib side by a coil spring 30 interposed between the large-diameter head portion 27a and the annular screw member 29.

In the leakage detecting means of the above structure, the annular screw member 29 itself can be exposed to atmosphere, water or the like, but it is preferable that in order to sufficiently protect the screw member and the like from adhesion of dust, occurrence of rust or the like, a front side of the leakage detecting means is air-tightly closed by the outer coating rubber layer 22 as shown in Fig. 1.

In the latter case, it is required that the outer coating rubber layer 22 can be broken with the rod member 27 by sharpening the end portion of the rod member 27 as shown in Fig. 1.

As mentioned above, the leakage detecting means can be constructed by disposing the rod member 27 into the through-hole 26 formed in the annular protrusion 16, so that the structure becomes very simple and the number of work steps for the arrangement of the detecting means can be sufficiently reduced.

Furthermore, the leakage detecting means can develop an excellent resistance to damage without special treatment because the members and parts constituting the detecting means may be made from a rigid material.

Moreover, the full length of the fastening member 2 can be sufficiently shortened by properly selecting a length of the rod member 27 protruded from the annular screw member 29 in connection with the size of the rod member 27, whereby the weight and cost of the hose can be reduced.

In the leakage-detecting hose according to the invention, if a fluid transported under a high pressure leaks out along the outer peripheral surface of the fastening member 2 as shown by broken lines in Fig. 1, the leaked fluid substantially directly arrives at the through-hole 26, and consequently the rod member 27 is pushed in a direction moving toward the connecting flange 15 by the pressure of the leaked fluid itself against the force of the coil spring 30. As a result, the rod member 27 and hence the small-diameter shaft portion 27c breaks the outer coating rubber layer 22 and moves up to a limit moving position.

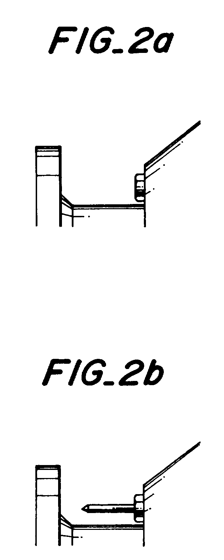

The movement of the rod member is schematically shown in Fig. 2 omitting the outer coating rubber layer for covering the front side of the leakage detecting means. The occurrence of leakage in the transported fluid can easily be confirmed by visually observing a change of the rod member 27 from a state shown in Fig. 2a to a state shown in Fig. 2b by a watchman or other operator.

Moreover, the visual observation can be further facilitated by increasing the volume of the protruded portion of the rod member 27 and/or by colouring the protruded portion different from the remaining portion of the rod member.

On the other hand, if the leaked fluid passes through the base hose body 1 in the radial direction and arrives at the passage 18 for guiding the leaked fluid, it is introduced into the position of the through-hole 26 through the passage 18, and consequently the rod member 27 is pushed to the limit moving position likewise the above case. Even in this case, the occurrence of leakage can be confirmed easily and rapidly.

In any case, the leakage of the leaked fluid toward the outside of the hose is reliably prevented by the seal ring 27b arranged in the large-diameter head portion 27a of the rod member 27.

Even if the formation of the passage 18 is omitted by spirally winding the elastic member 17 around the base hose body 1 so as to close the adjacent walls to each other, when the leaked fluid passes through the base hose body 1 in the radial direction, the leakage toward the outside of the hose in the radial direction is prevented by the pressure-resistant reinforcing layer 20, while it is guided along the inner face of the reinforcing layer 20 into the through-hole 26 and hence the rod member is pushed to the limit moving position likewise the above cases.

According to the invention, therefore, the leakage detecting means can be developed as is expected while sufficiently preventing the leakage of the leaked fluid toward the outside of the hose under an action of the pressure-resistant reinforcing layer 20 even in the absence of the passage 18 for guiding the leaked fluid.

As mentioned above, according to the invention, the structure of the leakage detecting means can be simplified and also the number of work steps for the arrangement of such a detecting means can be largely reduced. Furthermore, the resistance to damage can be considerably enhanced by making various members and parts in the leakage detecting means from a rigid material. In addition, the length of the fastening member can be sufficiently shortened by properly selecting the length of the annular protrusion and hence the length of the rod member protruding therefrom.

## Claims

1. A leakage-detecting hose comprising a base hose body (1) provided with a reinforcing layer embedded therein and a fastening member (2) fixed to the inner periphery of an end portion of the base hose body, wherein the outer periphery of the base hose body is covered with an elastic member (17), a passage (18) for guiding leaked fluid between adjacent side walls of said elastic member (17), and an end portion of a pressure-resistant reinforcing layer (20) arranged on the outer periphery of the elastic member is fixed to a flange portion (23) of an annular protrusion (16) located at a middle position in the longitudinal direction of the fastening member (2), and at least one through-hole (26) extending in the longitudinal direction of the fastening member is formed in the annular protrusion (16), said through-hole (26) communicating with said passage (18), and a rod member (27) movable toward a side of a hose end is disposed in the through-hole (26), said rod member (27) being disposed within said through-hole (26) in such a manner that it is moved against the force of a coil spring (30) by the pressure of the leaking fluid itself in a direction away from the base hose body (1) toward a limit moving position indicating presence of leakage fluid within said passage (18).

2. A leakage-detecting hose as claimed in claim 1, characterized in that said base hose body (1) comprises an inner rubber layer (3), inner and outer pressure-resistant reinforcing layers (4,5), a rubberized wire reinforcing layer (6), a cord reinforcing layer (7) and a cover rubber layer (8).

3. A leakage-detecting hose as claimed in claim 1 or 2, characterized in that said fastening member (2) is further provided at its top end with a connecting flange (15) and at a portion remote from the annular protrusion (16) with two saw-toothed ribs (9,10).

4. A leakage-detecting hose as claimed in any of claims 1 to 3, characterized in that said pressure-resistant reinforcing layer (20) is covered with a floating member (21) and an outer coating rubber layer (22).

5. A leakage-detecting hose as claimed in any of claims 1 to 4, characterized in that said rod member (27) comprises a large-diameter head portion (27a) and a small-diameter shaft portion (27c), and said large-diameter head portion is slidably contacted with said through-hole wall in said annular protrusion (16) together with a seal ring (27b) arranged at said head portion (27a), and said small-diameter shaft portion (27c) is slidably contacted with a through-hole wall of an annular screw member (29) threaded with said through-hole of said annular protrusion (16), and said coil spring (30) is interposed between said large-diameter head portion (27a) and said annular screw member (29).

6. A leakage-detecting hose as claimed in any of claims 1 to 5, characterized in that said annular protrusion (16) and/or said rod member (27) are made from a plastics material or a metal.

## Patentansprüche

1. Schlauch mit Lecknachweis, der folgende Komponenten aufweist: einen Schlauchgrundkörper (1), der mit einer in diesen eingebetteten Verstärkungsschicht und einem Befestigungselement (2) versehen ist, das am Innenumfang eines Endabschnitts des Schlauchgrundkörpers befestigt ist, wobei der Außenumfang des Schlauchgrundkörpers mit einem elastischen Element (17) umhüllt ist, einen Durchgang (18), um ausgetretenes Fluid zwischen benachbarten Seitenwänden des elastischen Elements (17) zu führen, und wobei ein Endabschnitt einer druckbeständigen Verstärkungsschicht (20), der auf dem Außenumfang des elastischen Elements angeordnet ist, an einem Flanschabschnitt (23) eines ringförmigen Vorsprungs (16) befestigt ist, der sich in der Längsrichtung in einer mittleren Position des Befestigungselements (2) befindet, und in dem ringförmigen Vorsprung (16) wenigstens ein Durchgangsloch (26) gebildet wird, das in der Längsrichtung des Befestigungselements verläuft, wobei das Durchgangsloch (26) mit dem Durchgang (18) in Verbindung steht und in dem Durchgangsloch (26) ein Stabelement (27) angeordnet ist, das zu einer Seite eines Schlauchendes bewegt werden kann, wobei das Stabelement (27) so innerhalb des Durchgangsloches (26) angeordnet ist, daß es durch den Druck von dem ausgetretenen Fluid selbst gegen die Kraft einer Schraubenfeder (30) in einer Richtung weg von dem Schlauchgrundkörper (1) hin zu einer Bewegungsgrenzstellung bewegt werden kann, die das Vorhandensein von ausgetretenem Fluid in dem Durchgang (18) anzeigt.

2. Schlauch mit Lecknachweis nach Anspruch 1, dadurch gekennzeichnet, daß der Schlauchgrundkörper (1) eine innere Gummischicht (3), innere und äußere druckbeständige Verstärkungsschichten (4, 5), eine gummierte, mit Draht verstärkte Schicht (6), eine Kord-Verstärkungslage (7) und eine Deckgummischicht (8) aufweist.

3. Schlauch mit Lecknachweis nach Anspruch 1 oder 2, dadurch gekennzeichnet, daß das Befestigungselement (2) an seinem oberen Ende außerdem mit einem Verbindungsflansch (15) und an einem von dem ringförmigen Vorsprung (16) entfernten Abschnitt mit zwei sägezahnartigen Rippen (9, 10) versehen ist.

4. Schlauch mit Lecknachweis nach einem der Ansprüche 1 bis 3, dadurch gekennzeichnet, daß die druckbeständige Verstärkungsschicht (20) mit einem Schwimmelement (21) und einer äußeren Gummi-Deckschicht (22) umhüllt ist.

5. Schlauch mit Lecknachweis nach einem der Ansprüche 1 bis 4, dadurch gekennzeichnet, daß das Stabelement (27) einen Kopfabschnitt (27a) mit großem Durchmesser und einen Wellenabschnitt (27c) mit kleinem Durchmesser aufweist und der Kopfabschnitt mit großem Durchmesser zusammen mit einem Dichtungsring (27b), der an dem Kopfabschnitt (27a) angeordnet ist, gleitend Kontakt mit der Wand des Durchgangslochs in dem ringförmigen Vorsprung (16) hat und der Wellenabschnitt (27c) mit kleinem Durchmesser gleitend Kontakt mit einer Wand eines Durchgangslochs eines ringförmigen Schraubenelements (29) hat, das mit dem Durchgangsloch des ringförmigen Vorsprungs (16) verschraubt wird, und die Schraubenfeder (30) zwischen dem Kopfabschnitt (27a) mit großem Durchmesser und dem ringförmigen Schraubenelement (29) eingefügt wird.

6. Schlauch mit Lecknachweis nach einem der Ansprüche 1 bis 5, dadurch gekennzeichnet, daß der ringförmige Vorsprung (16) und/oder das Stabelement (27) aus einem Plastikmaterial oder einem Metall hergestellt werden.

## Revendications

1. Tuyau flexible de détection de fuites, comprenant un corps de base (1) dans lequel est enrobée une couche de renforcement et un élément de fixation (2) fixé à la périphérie interne d'une portion terminale du corps de base, la périphérie externe du corps de base étant recouverte d'un élément élastique (17), un passage (18) pour guider le fluide qui s'échappe entre les parois latérales adjacentes dudit élément élastique (17), et une portion terminale d'une couche de renforcement (20) résistant à la pression arrangée à la périphérie externe de l'élément élastique est fixée à une portion de bride (23) d'une saillie annulaire (16) située à une position médiane en direction longitudinale de l'élément de fixation (2), et au moins un trou traversant (26) s'étendant dans la direction longitudinale de l'élément de fixation est formé dans la saillie annulaire (16), ledit trou traversant (26) communiquant avec ledit passage (18), et un élément de tige (27) mobile en direction d'un côté d'une extrémité du tuyau flexible est disposé dans le trou traversant (26), ledit élément de tige (27) étant disposé à l'intérieur dudit trou traversant (26) de telle sorte qu'il se déplace, à l'encontre de la force exercée par un ressort hélicoïdal (30), à l'aide de la pression du fluide-même qui s'échappe en s'écartant du corps de base (1) et en se dirigeant vers une position de mouvement limite indiquant la présence d'un fluide de fuite à l'intérieur dudit passage (18).

2. Tuyau flexible de détection de fuites selon la revendication 1, caractérisé en ce que ledit corps de base (1) comprend une couche de caoutchouc interne (3), des couches de renforcement interne et externe (4, 5) résistant à la pression, une couche (6) de renforcement de fil métallique enrobé de caoutchouc, une couche de renforcement de câblés (7) et une couche de caoutchouc de recouvrement (8).

3. Tuyau flexible de détection de fuites selon la revendication 1 ou 2, caractérisé en ce que ledit élément de fixation (2) est muni, en outre, à son extrémité supérieure, d'une bride de liaison (15) et, à une portion éloignée de la saillie annulaire (16), de deux nervures en dents de scie (9, 10).

4. Tuyau flexible de détection de fuites selon l'une quelconque des revendications 1 à 3, caractérisé en ce que ladite couche de renforcement (20) résistant à la pression est recouverte d'un élément flottant (21) et d'une couche de caoutchouc externe de recouvrement (22).

5. Tuyau flexible de détection de fuites selon l'une quelconque des revendications 1 à 4, caractérisé en ce que ledit élément de tige (27) comprend une portion de tête (27a) à grand diamètre et une portion d'arbre (27c) à petit diamètre, et ladite portion de tête à grand diamètre vient se mettre en contact par glissement avec ladite paroi de trou traversant dans ladite saillie annulaire (16), conjointement avec un anneau d'étanchéification (27b) arrangé à ladite portion de tête (27a), et ladite portion d'arbre (27c) à petit diamètre vient se mettre en contact par glissement avec une paroi de trou traversant d'un élément de vis annulaire (29) engrené par filet de vis avec ledit trou traversant de ladite saillie annulaire (16), et ledit ressort hélicoïdal (30) est intercalé entre ladite portion de tête (27a) à grand diamètre et ledit élément de vis annulaire (29).

6. Tuyau flexible de détection de fuites selon l'une quelconque des revendications 1 à 5, caractérisé en ce que ladite saillie annulaire (16) et/ou ledit élément de tige (27) sont réalisés à partir d'une matière plastique ou d'un métal.
